## Europäisches Patentamt
## European Patent Office
## Office européen des brevets

(19)

(11) Veröffentlichungsnummer: **0 033 930**
**B1**

(12)

# EUROPÄISCHE PATENTSCHRIFT

(45) Veröffentlichungstag der Patentschrift:
**21.08.85**

(51) Int. Cl.⁴: **C 02 F 3/00**

(21) Anmeldenummer: **81100725.1**

(22) Anmeldetag: **02.02.81**

(54) Verfahren zur Vergleichmässigung der Schmutzfracht eines Abwasserstromes.

(30) Priorität: **08.02.80 DE 3004609**

(43) Veröffentlichungstag der Anmeldung:
**19.08.81 Patentblatt 81/33**

(45) Bekanntmachung des Hinweises auf die Patenterteilung:
**21.08.85 Patentblatt 85/34**

(84) Benannte Vertragsstaaten:
**AT BE CH DE FR GB IT LI LU NL SE**

(56) Entgegenhaltungen:
**AT - B - 236 882**
**AT - B - 308 012**
**AT - B - 324 972**
**DE - A - 2 108 812**
**DE - B - 1 152 066**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Stein, Theodor, Feuerbachstrasse 42,**
**D-4618 Kamen (DE)**
Erfinder: **Helmboldt, Ralf, Ing., Auf der Lette 42,**
**D-4619 Bergkamen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, daß eine Anlage zur biologischen Abwasserreinigung in ihrer Leistung stark von der Schwankungsbreite der Zufuhr von Schmutzstoffen abhängt. Je gleichmäßiger sowohl die Menge als auch die Zusammensetzung der Schmutzstoffe, desto störungsfreier läßt sich die Reinigung durchführen und desto höher liegt der Reinigungsgrad. Daher werden besonders im Bereich der Reinigung von Industrieabwasser, das hauptsächlich nur während der Wochentage Montag bis Freitag und an diesen oft nur während einer begrenzten Arbeitszeit anfällt, den biologischen Reinigungsstufen Ausgleichsbecken vorgeschaltet, um die von der Produktion her unvermeidlichen Schwankungen zu kompensieren. Diese Becken sind relativ einfach zu betreiben, wenn nur ihr Fassungsvermögen so ausgelegt wird, daß auch selten vorkommende Spitzenlasten weitgehend kompensiert werden können. Schwankungen von ±25% des Mittelwertes werden von einer gut eingearbeiteten biologischen Reinigungsstufe in den meisten Fällen ohne Probleme vertragen. Gelegentlich durch die zur Verhinderung von Faulvorgängen im Ausgleichsbecken erforderliche Belüftung auftretenden Flockung von Bakterien wird durch die Filterwirkung der eigentlichen biologischen Reinigungsstufe dem Abfluß ferngehalten.

Es liegt auf der Hand, daß eine Vergleichsmäßigung der Abwassermenge und Schmutzfrachten um so einfacher zu erreichen ist, je größer man das Ausgleichsbecken auslegt, was aber gleichzeitig hohe Investitionskosten und erhöhten Platzbedarf bedeutet.

Problematisch wird die Verfahrensführung jedoch in relativ kleinen Ausgleichsbecken, insbesondere dann, wenn die nachgeschaltete biologische Reinigungsstufe nicht vom gleichen Unternehmen, sondern von einer Kommune oder einem Abwasserverband betrieben wird und dieser Betreiber seine Gebühren nicht nach durchschnittlichen Frachten, sondern nach Spitzenlasten erhebt, und daher vom Betreiber des Ausgleichsbeckens angestrebt wird, die höchsten Werte möglichst nahe an das arithmetische Mittel des Veranlagungszeitraums heranzuführen.

Aufgabe der Erfindung ist daher, ein Verfahren zur Vergleichsmäßigung der Abwasserschmutzfracht zu schaffen, mit dem es auch mit Hilfe eines relativ kleinen Ausgleichsbeckens gelingt, die Abwasserschmutzfracht so zu vergleichsmäßigen, daß die Belastungswerte möglichst weitgehend an einen vorgegebenen, dem arithmetischen Mittel des Veranlagungszeitraums weitgehend angenäherten Wert angepaßt sind und Spitzenwerte vermieden werden.

Die Aufgabe wird gelöst durch ein Verfahren zur Vergleichsmäßigung der Schmutzfracht eines hinsichtlich Fracht und Menge stark schwankenden Abwasserstromes mittels eines Misch- und Ausgleichsbeckens, woraus der Abwasserstrom in einer gesteuerten Abflußmenge abgegeben wird, das dadurch gekennzeichnet ist, daß die Steuerung der Abflußmenge in Abhängigkeit von

a)  dem momentanen Beckeninhalt im Vergleich zum angestrebten momentanen Beckeninhalt und
b)  einem oder mehreren gemessenen Verschmutzungsparametern

unter Berücksichtugung eines vorgegebenen Maximalwertes für einen Belastungswert des Abwasserstromes gewichtet nach dem zeitlichen Fortgang des gewählten Ausgleichszeitraumes erfolgt.

Eine bevorzugte Ausführungsform des Verfahrens ist dadurch gekennzeichnet, daß der momentane Beckeninhalt entsprechend vorgegebenen zeitabhängigen Beckeninhaltskurven eingestellt wird.

Besonders bevorzugt ist ein Verfahren, bei dem die zeitabhängigen Beckeninhaltskurven, bezogen auf einen Wochenzeitraum, den Gleichungen

$$W_{soll\,t_n} = W_{soll\,min} + \left[\frac{S_{soll}}{120} + \left(\frac{S_{soll}}{120} \times \frac{(120-t_n)}{120}\right)\right] t_n$$

(t = 0−120 h)

und

$$W_{soll\,t_n} = W_{soll\,max} - \left[\frac{S_{soll}}{48} - \left(\frac{S_{soll}}{48} \times \frac{168-t_n}{48}\right)\right] |(120-t_n)|$$

(t = 121−168 h)

entsprechen, wobei

| | |
|---|---|
| $W_{soll\,tn}$ (m³) | = im Ausgleichsbecken zum Zeitpunkt $t_n$ angestrebte Wassermenge |
| $W_{soll\,min/max}$ (m³) | = im Ausgleichsbecken angestrebte minimale/maximale Wassermenge |
| $S_{soll}$ (m³) | = angestrebte Speichermenge Montag−Freitag |
| $t_n$ (h) | = Zeitpunkte zwischen 0 und 168 h |

bedeuten.

Eine weitere bevorzugte Ausführungsform des Verfahrens ist dadurch gekennzeichnet, daß die Steuerung der Abflußmenge in Abhängigkeit vom Beckeninhalt gemäß der Gleichung

$$A_w = Z_h + (W_{ist} - W_{soll\,t_n}) \, (Z_d + S_D Z_d)/24$$

erfolgt, wobei

| | |
|---|---|
| $A_w \ (m^3/h)$ | = nach $W_{ist}$ erforderliche Abflußmenge |
| $Z_h \ (m^3/h)$ | = durchschnittlicher stündlicher Zulauf |
| $W_{ist} \ (m^3)$ | = momentaner Beckeninhalt |
| $Z_d \ (m^3/d)$ | = durchschnittlicher täglicher Zulauf |
| $S_D Z_d \ (\pm \, m^3/d)$ | = Standardabweichungen der durchschnittlichen täglichen Zulaufmengen |

bedeuten.

Eine weitere bevorzugte Ausführungsform des Verfahrens ist dadurch gekennzeichnet, daß die Größen der Verschmutzungsparameter gewichtet zusammengefaßt werden.

Eine weitere bevorzugte Ausführungsform des Verfahrens ist dadurch gekennzeichnet, daß die entsprechend einem oder mehreren gemessenen Verschmutzungsparametern abzulassende Wassermenge $Q_h$ gemäß der Gleichung

$$Q_h = \frac{X_{soll}}{P_1 \ldots + P_n + K}$$

erfolgt, wobei

| | |
|---|---|
| $Q_h \ (m^3/h)$ | = in Abhängigkeit von der angestrebten vorgegebenen Belastungszahl stündlich abzulassende Menge |
| $X_{soll}$ | = angestrebter maximaler Belastungswert |
| $P_1 \ldots P_n$ | = Parameter zur Errechnung von $Q_h$ |
| $K$ | = eventuelle Konstanten zur Berechnung von $Q_h$ |

bedeuten.

Eine weitere bevorzugte Ausführungsform des Verfahrens ist dadurch gekennzeichnet, daß die gewichtete Steuerung gemäß der Gleichung

$$A = Q_h \, 1 - F_{(1,2)} + A_w \cdot F_{(1,2)}$$

erfolgt, wobei $F_1$ und $F_2$ Gewichtungsfaktoren sind und A die tatsächliche Abflußmenge ist.

Eine weitere bevorzugte Ausführungsform des Verfahrens ist dadurch gekennzeichnet, daß die Gewichtung in Abhängigkeit von der Abweichung des momentanen Beckeninhalts von vorgegebenen zeitabhängigen Füllmengenkurven erfolgt.

Eine weitere bevorzugte Ausführungsform des Verfahrens ist dadurch gekennzeichnet, daß die Gewichtung in Abhängigkeit von der Abweichung des momentanen Beckeninhalts von vorgegebenen zeitabhängigen Füllmengenkurven, bezogen auf einen Wochenzeitraum, gemäß den Gleichungen

$$F_1 = \frac{\left| W_{ist} - W_{soll\,t_n} \right|}{(V - W_{soll\,min}) - \dfrac{S_{soll}}{120} \, t_n}$$

bei $t_n = 0-120 \ h$

$$F_2 = \frac{\left| W_{ist} - W_{soll\,t_n} \right|}{(V - W_{soll\,min}) - \dfrac{S_{soll}}{48} \, (168 - t_n)}$$

bei $t_n = 121-168 \ h$

erfolgt, wobei V das Volumen des Ausgleichsbeckens ist.

Die Gleichung mit den einzusetzenden Größen, gemäß der die Abflußmenge gesteuert wird, ergibt sich, ausgeführt am Beispiel eines Wochenzeitraumes, wie folgt:

In den Gleichungen bedeuten:

$Z_{5d}$ m³/Mo–Fr  Zulauf von Montag bis Freitag
$Z_w$ m³/Woche  Zulauf von Montag bis Sonntag
$A_{soll\,d}$ m³/d    Angestrebte Abflußmenge pro Tag.

1.  Ermittlungen der angestrebten durchschnittlichen Abflußmenge pro Tag

$$A_{soll\,d} = Z_w/7$$

Ermittlungen der durchschnittlich von Montag $6^{00}$ h bis Samstag $6^{00}$ h zu speichernden Wassermenge

$$S_{soll} = Z_{5\,d} - 7 \cdot A_{soll\,d}$$

2.  Ermittlung der angestrebten Füllmenge (Wassermenge im Ausgleichsbecken)
2.1. Maximale Wassermenge Samstag $6^{00}$ h

$$W_{soll\,max} = V - S_D Z_d$$

2.2. Minimale Wassermenge Montag $6^{00}$ h

$$W_{soll\,min} = W_{soll\,max} - S_{soll}$$

2.3. Füllmenge für die Zeitpunkte Montag $6^{00}$ h bis Samstag $6^{00}$ h

$$W_{soll\,t_n} = W_{soll\,min} + \left[ \frac{S_{soll}}{120} + \left( \frac{S_{soll}}{120} \times \frac{(120-tn)}{120} \right) \right] tn$$

(t = 0–120 h)

2.4. Füllmenge für die Zeitpunkte Samstag $6^{00}$ h bis Montag $6^{00}$ h

$$W_{soll\,t_n} = W_{soll\,max} - \left[ \frac{S_{soll}}{48} - \left( \frac{S_{soll}}{48} \times \frac{168-t_n}{48} \right) \right] |(120-tn)|$$

(t = 121–168 h)

3.  Die in Abhängigkeit von der angestrebten vorgegebenen Belastungszahl abzulassende Menge $Q_h$ ist unabhängig von den vorgegebenen Belastungswerten und kann aus diesen vorgegebenen Werten errechnet werden nach

$$Q_h = \frac{X_{soll}}{P_1 \ldots + P_n + K}$$

Die Ermittlung von $Q_h$ ist in den Beispielen näher angeführt.
4.  Die nach Füllmenge erforderliche Abflußmenge $A_W$.
Bei der angestrebten Füllmenge (im Ausgleichsbecken vorhandene Wassermenge) $W_{soll\,t_n}$ würde die angestrebte Abflußmenge gegeben sein durch die durchschnittliche stündliche Zulaufmenge $Z_h$. Bei der maximalen Füllmenge $W_{ist} = V$ wäre die Abflußmenge beim Zeitpunkt $t_n = 120$ h und damit $W_{soll\,max}$ gegeben durch $(Z_d + S_D Z_d)/24$.
Damit ergibt sich die Abflußmenge nach Füllmenge zu

$$A_w = Z_h + (W_{ist} - W_{soll\,t_n})\,(Z_d + S_D Z_d)/24$$

5.  Gewichtung der Abflußgleichungen

$$F_1 = \frac{|W_{ist} - W_{soll\,t_n}|}{(V - W_{soll\,min}) - \dfrac{S_{soll}}{120}\,t_n}$$

bei $t_n = 1$–120 h

4

und bei $t_n = 121-168\ h$

$$F_2 = \frac{\left|W_{ist}-W_{soll\ t_n}\right|}{(V-W_{soll\ min}) - \dfrac{S_{soll}}{48}\ (168-t_n)}.$$

Wegen des Umfangs der erforderlichen Verfahrensschritte und Regelgeschwindigkeit wird man zur optimalen Steuerung der Abflußmenge einen Prozeßrechner einsetzen, wobei dem Rechner die Sollzahlen vorgegeben werden und veränderliche Größen, wie etwa der Zeitablauf, die Wassermenge im Becken oder der CSB-Wert per Sensor ermittelt und ebenfalls direkt in den Rechner eingegeben werden können.

Gemäß dem erfindungsgemäßen Verfahren wird neben der Vergleichsmäßigung der Abwasserschmutzfracht unter Angleichung an einen vorgegebenen angestrebten Wert auch eine optimale, d.h. möglichst große Füllmenge des Ausgleichsbeckens zum jeweiligen Zeitpunkt im Wochenablauf erzielt, da der Wirkungsgrad einer eventuell vorhandenen Belüftungseinrichtung und damit der biologische Teil-Abbau, also die Verminderung der Abwasserfracht, um so günstiger ist, je höher der Wasserstand im Becken ist. Auch die Verdünnungsrate für die bei diesem Prozeß als Einzelindividuen vorliegenden Mikroorganismen wird mit höherer Füllmenge kleiner, d.h., die Neubildung von Biomasse und damit die Zugabe von Nährsalzen zum Becken kann kleiner gehalten werden.

Darüber hinaus wirken sich die Schwankungen der Schmutzfracht auf die Konzentration im Becken natürlich umso schwächer aus, je größer die Füllmenge im Becken ist.

<p style="text-align:center">Beispiele zur Ermittlung von $Q_h$</p>

1. Ermittlung von $Q_h$ aus der Veranlagungsformel des Lippe-Verbandes
   (B = Belastungszahl):

$$B = \frac{Q}{0{,}0026}\left[0{,}40 + 0{,}25\ \frac{A-0{,}3}{6{,}0-0{,}3} + 0{,}35\left(\frac{1}{2}\ \frac{BSB-20}{250-20} + \frac{1}{2}\ \frac{CSB-80}{500-80}\right)\right].$$

Es bedeuten:

$Q\quad$ = Abflußmenge in l/sec  
$A\quad$ = Absetzbare Stoffe in ml/l  
$BSB$ = $BSB_5$ in mg/l  
$CSB$ = $CSB^5$ in mg/l

Vereinfacht durch die Annahmen

absetzbare Stoffe $A = 2$ ml/l  
$BSB_5\qquad\qquad = 0{,}67\ CSB$

resultiert folgende vereinfachte Gleichung:

$$B = Q\,(163{,}8 + 0{,}356\ CSB)$$

Umgestellt nach Q rergibt sich:

$$Q = \frac{B}{163{,}8 + 0{,}356\ CSB}.$$

Da in dieser Gleichung Q in l/sec angegeben ist, wird zur Errechnung von $Q_h$ auf m³/h umge-rechnet:

$$Q_h = \frac{B}{45{,}5 + 9{,}9 \cdot 10^{-2}\ CSB}.$$

Hier ist $X_{soll}$ also gleich B.

2. Ermittlung von $Q_h$ gemäß Veranlagungsgleichung des Abwasserabgabengesetzes (AbwAG)
   In der Formel

$$S = Q_a\left[A-0{,}1 + \frac{2{,}2\,(CSB-15)}{100\,000} + \frac{5\ Hg}{100} + \frac{Cd}{100} + \frac{0{,}3\ G_F}{1000}\right].$$

bedeuten

S   = Anzahl der Schadeinheiten pro Jahr
Q   = Abwassermenge in $m^3/a$
CSB = Chemischer Sauerstoffbedarf in mg/l bzw. $g/m^3$
A   = Absetzbare Stoffe in ml/l bzw. $l/m^3$ (für dieses Beispiel mit einem organischen Anteil von mindestens zehn von Hundert)
Hg  = Quecksilbergehalt in mg/l bzw. $g/m^3$
Cd  = Cadmiumgehalt in mg/l bzw. $g/m^3$
$G_F$  = Fischschädlichkeit (Verdünnungsfaktor)

(Für den nicht kurzfristig zu erstellenden Wert für die Fischschädlichkeit wird zweckmäßig ein Erfahrungswert aus längeren Beobachtungszeiten eingesetzt.)
Umgestellt auf die Jahreswassermenge:

$$Q_a = \frac{S}{A-0{,}1 + 2{,}2 \cdot 10^{-5} (CSB-15) + 5 \cdot 10^{-2} Hg + 10^{-2} Cd + 3 \cdot 10^{-4} G_F} \cdot$$

Für die stündlich abzulassende Menge $Q_h$ ergibt sich dann:

$$Q_h = \frac{S}{8760 (A-0{,}1 + 2{,}2 \cdot 10^{-5} (CSB-15) + 5 \cdot 10^{-2} Hg + 10^{-2} Cd + 3 \cdot 10^{-4} G_F)} \cdot$$

In diesem Beispiel ist $X_{soll}$ also S, die Verschmutzungsparameter sind CSB, A, Hg, Cd und $G_F$.

## Patentansprüche

1. Verfahren zur Vergleichsmäßigung der Schmutzfracht eines hinsichtlich Fracht und Menge stark schwankenden Abwasserstromes mittels eines Misch- und Ausgleichsbeckens, woraus der Abwasserstrom in einer gesteuerten Abflußmenge abgegeben wird, dadurch gekennzeichnet, daß die Steuerung der Abflußmenge in Abhängigkeit von

a)   dem momentanen Beckeninhalt im Vergleich zum angestrebten momentanen Beckeninhalt und
b)   einem oder mehreren gemessenen Verschmutzungsparametern

unter Berücksichtigung eines vorgegebenen Maximalwertes für einen Belastungswert des Abwasserstromes gewichtet nach dem zeitlichen Fortgang des gewählten Ausgleichszeitraumes erfolgt.

2. Verfahren nach Anspruch 1, dadurch gekennzeichnet, daß der momentane Beckeninhalt entsprechend vorgegebenen zeitabhängigen Beckeninhaltskurven eingestellt wird.

3. Verfahren gemäß Anspruch 1 oder 2, dadurch gekennzeichnet, daß die zeitabhängigen Beckeninhaltskurven, bezogen auf einen Wochenzeitraum, den Gleichungen

$$W_{soll\,t_n} = W_{soll\,min} + \left[\frac{S_{soll}}{120} + \left(\frac{S_{soll}}{120} \times \frac{(120-t_n)}{120}\right)\right] t_n$$

(t = 0−120 h)

und

$$W_{soll\,t_n} = W_{soll\,max} - \left[\frac{S_{soll}}{48} - \left(\frac{S_{soll}}{48} \times \frac{168-t_n}{48}\right)\right] |(120-t_n)|$$

(t = 121−168 h)

entsprechen, wobei

$W_{soll\,tn}$ ($m^3$)       = im Ausgleichsbecken zum Zeitpunkt $t_n$ angestrebte Wassermenge
$W_{soll\,min/max}$ ($m^3$)  = im Ausgleichsbecken angestrebte minimale/maximale Wassermenge
$S_{soll}$ ($m^3$)        = angestrebte Speichermenge Montag−Freitag
$t_n$ (h)          = Zeitpunkte zwischen 0 und 168 h

bedeuten.

4. Verfahren nach Anspruch 1−3, dadurch gekennzeichnet, daß die Steuerung der Abflußmenge in Abhängigkeit vom Beckeninhalt gemäß der Gleichung

$$A_w = Z_h + (W_{ist} - W_{soll\,t_n})\,(Z_d + S_D Z_d)/24$$

erfolgt, wobei

$A_w\ (m^3/h)$     = nach $W_{ist}$ erforderliche Abflußmenge
$Z_h\ (m^3/h)$     = durchschnittlicher stündlicher Zulauf
$W_{ist}\ (m^3)$     = momentaner Beckeninhalt
$Z_d\ (m^3/d)$     = durchschnittlicher täglicher Zulauf
$S_D Z_d\ (\pm\,m^3/d)$     = Standardabweichungen der durchschnittlichen täglichen Zulaufmengen

bedeuten.

   5. Verfahren nach Anspruch 1—4, dadurch gekennzeichnet, daß die Größen der Verschmutzungsparameter gewichtet zusammengefaßt werden.

   6. Verfahren nach Anspruch 1—5, dadurch gekennzeichnet, daß die entsprechend einem oder mehreren gemessenen Verschmutzungsparametern abzulassende Wassermenge $Q_h$ gemäß der Gleichung

$$Q_h = \frac{X_{soll}}{P_1 \ldots + P_n + K}$$

erfolgt, wobei

$Q_h\ (m^3/h)$ = in Abhängigkeit von der angestrebten vorgegebenen Belastungszahl stündlich abzu-lassende Menge
$X_{soll}$ = angestrebter maximaler Belastungswert
$P_1 \ldots P_n$ = Parameter zur Errechnung von $Q_h$
$K$ = eventuelle Konstanten zur Berechnung von $Q_h$

bedeuten.

   7. Verfahren nach Anspruch 1—6, dadurch gekennzeichnet, daß die gewichtete Steuerung gemäß der Gleichung

$$A = Q_h\,(1 - F_{(1,2)}) + A_w \cdot F_{(1,2)}$$

erfolgt, wobei $F_1$ und $F_2$ Gewichtungsfaktoren sind und A die tatsächliche Abflußmenge ist.

   8. Verfahren nach Anspruch 1—7, dadurch gekennzeichnet, daß die Gewichtung in Abhängigkeit von der Abweichung des momentanen Beckeninhalts von vorgegebenen zeitabhängigen Füllmengenkurven erfolgt.

   9. Verfahren nach Anspruch 1—8, dadurch gekennzeichnet, daß die Gewichtung in Abhängigkeit von der Abweichung des momentanen Beckeninhalts von vorgegebenen zeitabhängigen Füllmengenkurven, bezogen auf einen Wochenzeitraum, gemäß den Gleichungen

$$F_1 = \frac{\left|W_{ist} - W_{soll\,t_n}\right|}{(V - W_{soll\,min}) - \dfrac{S_{soll}}{120}\,t_n}$$

bei $t_n = 0 - 120\ h$

$$F_2 = \frac{\left|W_{ist} - W_{soll\,t_n}\right|}{(V - W_{soll\,min}) - \dfrac{S_{soll}}{48}\,(168 - t_n)}$$

bei $t_n = 121 - 168\ h$

erfolgt, wobei V das Volumen des Ausgleichsbeckens ist.


## Claims

   1. Method for equalising the waste load in a stream of waste water which stream fluctuates greatly in respect of load and quantity by means of a mixing and equalising basin which discharges the waste water stream in controlled amounts, characterised in that the control of the amount of discharge is weighted according to the progression in time of the selectet equalisation period, depending on

a) the actual content of the basin compared to the intended actual content, and
b) one or several measured pollution parameters

and taking into account a given maximum value for a waste water load value.

2. Method in accordance with Claim 1, characterised in that the actual content of the basin is adjusted according to given time dependent basin-content curves.

3. Method in accordance with claim 1 or 2, characterised by the fact that the time dependent basin-content curves related to a period of one week correspond to the equations:

$$W_{\text{target } t_n} = W_{\text{target min}} + \left[\frac{S_{\text{target}}}{120} + \left(\frac{S_{\text{target}}}{120} \times \frac{(120-t_n)}{120}\right)\right] t_n$$

$$(t = 0{-}120 \text{ h})$$

and

$$W_{\text{target } t_n} = W_{\text{target max}} - \left[\frac{S_{\text{target}}}{48} - \left(\frac{S_{\text{target}}}{48} \times \frac{168-t_n}{48}\right)\right] |(120-t_n)|$$

$$(t = 121{-}168 \text{ h})$$

where

$W_{\text{target tn}}$ (m³) = intended water volume in the equalising basin at the thime $t_n$
$W_{\text{target min/max}}$ (m³) = min/max intended water volume in the equalising basin
$S_{\text{target}}$ (m³) = intended storage volume Monday—Friday
$t_n$ (h) = times between 0 and 168 h.

4. Method in accordance with claims 1—3, characterised in that the control of the discharge volume takes place in relation to the basin content in accordance with the equation:

$$A_w = Z_h + (W_{\text{actual}} - W_{\text{target } t_n}) (Z_d + S_D Z_d)/24$$

where

$A_w$ (m³/h) = required discharge volume in accordance with $W_{\text{actual}}$
$Z_h$ (m³/h) = average input per hour
$W_{\text{actual}}$ (m³) = actual basin content
$Z_d$ (m³/d) = average daily input
$S_D Z_d$ (± m³/d) = standard deviations from the average daily input volumes

5. Method in accordance with claims 1—4, characterised in that the dimensions of the pollution parameters are combined in a weighted manner.

6. Method in accordance with claims 1—5, characterised in that the discharge of the volumes of water $Q_h$ in relation to one or several measured pollution parameters takes place in accordance with the equation

$$Q_h = \frac{X_{\text{target}}}{P_1 \ldots + P_n + K}$$

where

$Q_h$ (m³/h) = volume to be discharged per hour in relation to the intended given load value
$X_{\text{target}}$ = intended maximum load value
$P_1 \ldots P_n$ = parameters for the calculation of $Q_h$
$K$ = possible constants for the calculation of $Q_h$

7. Method in accordance with claims 1—6, characterised in that the weighted control takes place according to the equation

$$A = Q_h (1 - F_{(1,2)}) + A_w \cdot F_{(1,2)}$$

where $F_1$ and $F_2$ are weighting factors and A is the actual discharge volume.

8. Method in accordance with claims 1—7, characterised in that the weighting is in relation to the deviation of the actual basin content from the given time dependent fill-volume curves.

8

9. Method in accordance with claims 1–8, characterised in that the weighting is in relation to the deviation of the actual basin content from the given timedependent fill-volume curves related to the period of one week in accordance with the equations:

$$F_1 = \frac{\left| W_{actual} - W_{target\,t_n} \right|}{(V - W_{target\,min}) - \dfrac{S_{target}}{120}\,t_n}$$

at $t_n = 0 - 120$ h

$$F_2 = \frac{\left| W_{actual} - W_{target\,t_n} \right|}{(V - W_{target\,min}) - \dfrac{S_{target}}{48}\,(168 - t_n)}$$

at $t_n = 121 - 168$ h

where V equals the volume of the equalising basin.

## Revendications

1. Procédé pour égaliser la charge polluante d'un courant d'eaux usées présentant de fortes fluctuations pour ce qui est de sa charge et de son débit, à l'aide d'un bassin d'homogénéisation et de compensation, dont le courant d'eaux usées sort avec un débit d'évacuation commandé, caractérisé en ce que la commande du débit d'évacuation est réalisée en fonction

a) du volume instantané du bassin, par comparaison avec le volume instantané du bassin tel que prescrit, et

b) d'un ou plusieurs paramètres de pollution mesurés,

ent tenant compte d'une valeur maximale prédéfinie pour une charge du courant d'eaux usées, pondérée en fonction de l'évolution du temps sur la période de compensation choisie.

2. Procédé selon la revendication 1, caractérisé en ce que le volume instantané du bassin est ajusté en fonction de courbes de volume de bassin prédéfinies et dépendant du temps.

3. Procédé selon l'une des revendications 1 ou 2, caractérisé en ce que les courbes de volume du bassin dépendant du temps, rapportées à une période d'une semaine, satisfont aux équations suivantes:

$$W_{p,\,t_n} = W_{p,\,min} + \left[\frac{S_p}{120} + \left(\frac{S_p}{120} \times \frac{120 - t_n}{120}\right)\right] t_n$$

pour $t = 0$ à 120 h,

et

$$W_{p,\,t_n} = W_{p,\,max} - \left[\frac{S_p}{48} - \left(\frac{S_p}{48} \times \frac{168 - t_n}{48}\right)\right] \left| 120 - t_n \right|$$

pour $t = 121 - 168$ h,

où:

$W_{p,\,tn}$ (m³) = quantité d'eau prescrite dans le bassin de compensation à l'instant $t_n$
$W_{p,\,min/max}$ (m³) = quantité d'eau minimale/maximale prescrite dans le bassin de compensation
$S_p$ (m³) = quantité d'accumulation prescrite du lundi au vendredi.
$t_n$ (h) = moments entre 0 et 168 h.

4. Procédé selon l'une des revendications 1 à 3, caractérisé en ce que la commande du débit d'evacuation est effectuée en fonction du volume du bassin selon l'équation suivante:

$$A_w = Z_h + (W_i - W_{p,\,t_n})\,(Z_d + S_D Z_d)/24$$

9

où:

$A_w$ (m³/h)     = débit e'évacuation nécessaire selon $W_i$
$Z_h$ (m³/h)     = débit entrant en moyenne horaire
$W_i$ (m³)      = volume instantané du bassin
$Z_d$ (m³/d)     = débit entrant, en moyenne journalière
$S_D Z_d$ ($\pm$ m³/d)  = écarts types des débits entrant en moyenne journalière.

5. Procédé selon l'une des revendications 1 à 4, caractérisé en ce que les grandeurs des paramètres de pollution sont rassemblées d'une manière pondérée.

6. Procédé selon l'une des revendications 1 à 5, caractérisé en ce que le débit d'eau $Q_h$ devant s'écouler en fonction d'un ou plusieurs paramètres de pollution mesurés est défini par l'équation suivante:

$$Q_h = \frac{X_p}{P_1 \dots + P_n + K}$$

où

$Q_h$ (m³/h) = débit devant être évacué chaque heure, en fonction de la charge prescrite prédéfinie.
$X_p$ = charge maximale prescrite
$P_1 \dots P_n$ = paramètres pour le calcul de $Q_h$
$K$ = éventuelle constante pour le calcul de $Q_h$.

7. Procédé selon l'une des revendications 1 à 6, caractérisé en ce que la commande pondérée s'effectue selon l'équations suivante:

$$A = Q_h \, (1 - F_{(1,2)}) + A_w \, F_{(1,2)}$$

où $F_1$ et $F_2$ sont des coefficients de pondération et A est le débit d'évacuation effectif.

8. Procédé selon l'une des revendications 1 à 7, caractérisé en ce que la pondération est effectuée en fonction de l'écart entre le volume instantané du bassin et les courbes de volume de remplissage prédéfinies et dépendant du temps.

9. Procédé selon l'une des revendications 1 à 8, caractérisé en ce que la pondération est effectuée en fonction de l'écart entre le volume instantané du bassin et les courbes de volume de remplissage prédéfinies et dépendant du temps, sur la base d'une période de une semaine, d'après les équations suivantes:

$$F_1 = \frac{\left| W_i - W_{p,\,t_n} \right|}{(V - W_{p,\,min}) - \dfrac{S_p}{120}\, t_n}$$

pour $t_n = 0-120$ h

$$F_2 = \frac{\left| W_i - W_{p,\,t_n} \right|}{(V - W_{p,\,min}) - \dfrac{S_p}{48}\, (168 - t_n)}$$

pour $t_n = 121-168$ h

V étant le volume du bassin de compensation.